# FASCICULE DE BREVET EUROPEEN

(11) **EP 1 038 347 B1**
(45) Date de publication et mention de la délivrance du brevet: **22.10.2003**
(21) Numéro de dépôt: 98958323.2
(22) Date de dépôt: 04.12.1998
(51) Int. Cl.: H02K 16/00, H02P 7/74

(54) **MOTEUR ELECTRIQUE AUTOSYNCHRONE ALTERNATIF**
SELBSTGEFÜHRTER WECHSELSTROMSYNCHRONMOTOR
RECIPROCATING ASYNCHRONOUS ELECTRIC MOTOR

(30) Priorité: 04.12.1997 FR 9715275
(43) Date de publication de la demande: 27.09.2000
(73) Titulaire: ETAT FRANCAIS Représenté par le Délégué Général pour l'Armement, 00460 Armées (FR)
(72) Inventeur: VIVIEN, Didier, F-83310 Cogolin (FR)
(74) Mandataire: Jacobson, Claude
(86) Numéro de dépôt international: FR9802616
(87) Numéro de publication internationale: WO99029027

(56) Documents cités:
- EP-A- 0 572 803
- DE-U- 9 110 945
- DE-U- 9 300 410
- FR-A- 2 280 524
- US-A- 4 797 600
- US-A- 5 117 141
- US-A- 5 574 246
- PATENT ABSTRACTS OF JAPAN vol. 12, no. 440 (E-684), 18 novembre 1988 & JP 63 171141 A (EIZO KIKUCHI), 14 juillet 1988

## Description

L'invention concerne un moteur électrique autosynchrone alternatif pour la propulsion, en particulier de torpilles ainsi qu'un procédé de contrôle d'un tel moteur.

Le moteur selon l'invention a une technologie « autosynchrone » (moteur alternatif synchrone à découpage, autopiloté). Il comprend deux rotors contrarotatifs supportant des aimants capables de produire un champ magnétique. Les deux couples sont opposés et égaux en valeur absolue.

Les conditions d'emploi d'un moteur de torpille font apparaître des contraintes particulières dont il faut soit minimiser les incidences soit tirer avantage. Les principaux critères de performance sont les suivants :
- masse limitée : le moteur doit avoir un ratio puissance/masse supérieure à 1 (KW/Kg),
- encombrement lié à l'implantation dans une coque de diamètre utile voisin de 500 mm.
- le moteur actionne des hélices, et est assimilé à une machine de traction qui doit en particulier maîtriser les phases de démarrage.
- Le contrôle/commande, les tests, les commandes de sécurité vis-à-vis du stoppage doivent être fiables,
- Les objectifs de bruits acoustiques et de vibrations doivent être les plus bas,
- L'environnement « chocs et vibrations » du moteur est sévère (phases de stockage),

Le brevet US5117141 décrit un moteur à courant continu pour la propulsion, par exemple de torpilles lourdes, comportant l'utilisation de stators équipés de bobinages associés à deux rotors contrarotatifs supportant des aimants et colinéaires d'arbres concentriques (3, 4), ainsi que l'utilisation de moyens de contrôle.

Le brevet DE9300410 décrit un dispositif pour la fabrication de fils pour ampoule comportant l'utilisation de moteurs consistant en des stators et des rotors contrarotatifs supportant des aimants et colinéaires d'arbres concentriques, ainsi que l'utilisation de moyens de contrôle. Un procédé de contrôle des moteurs consistant à contrôler la vitesse de chacun des (deux) arbres est en outre décrit.

L'invention a pour but de proposer un moteur, en particulier de propulsion de torpille, à au moins deux vitesses voire multivitesse, silencieux avec un coût de série attractif et un coût de maintenance réduit.

L'invention a pour objet un procédé de contrôle d'un moteur autosynchrone alternatif pour la propulsion, en particulier de torpille lourdes, comportant des moyens électroniques de puissance des moyens éléctroniques de commande deux stators équipés de bobinages associés à deux rotors contrarotatifs supportant des aimants et colinéaires d'arbres concentriques, le plus extérieur abritant le plus intérieur, procédé caractérisé en ce qu'il consiste à piloter le rotor de l'arbre le plus extérieur en vitesse et à piloter le rotor de l'arbre intérieur en couple de façon à ce qu'il délivre un couple équivalent à celui du rotor de l'arbre le plus extérieur.

L'invention a aussi pour objet un moteur autosynchrone alternatif pour la propulsion, en particulier de torpilles lourdes, et pour la mise en oeuvre du procédé selon la revendication 1, comportant des moyens électroniques de puissance, des moyens électroniques de contrôle/commande, deux stators équipés de bobinages associés à deux rotors contrarotatifs supportant des aimants et colinéaires d'arbres concentriques, le plus extérieur abritant le plus intérieur, caractérisé en ce qu'il comporte des moyens de régulation de vitesse de l'un des rotors ainsi que des moyens de régulation du couple de l'autre rotor.

Selon une caractéristique particulière, les moyens électroniques de contrôle commande comportent des moyens aptes à mesurer l'intensité absorbée par le moteur ainsi que des moyens aptes à mesurer la vitesse de rotation de l'arbre extérieur, ainsi qu'éventuellement des moyens de mesure d'une tension intermédiaire.

Selon une autre caractéristique, l'arbre intérieur traverse le moteur et présente une sortie mécanique pour teste.

Selon d'autres caractéristiques, le moteur peut comporter une ou plusieurs des caractéristiques suivantes :
- les moyens électroniques de puissance sont à la périphérie du carter, pour former un moteur monobloc,
- le moteur est alimenté en courant continu,
- l'arbre intérieur est creux pour abriter une commande de filoguidage,
- le carter comporte un circuit d'eau de mer destiné au refroidissement des stators et éventuellement des moyens électroniques de puissance, notamment des transistors de puissance qui peuvent être du type IGBT (transistor bipolaire à gachette inversée),
- le moteur comporte une pompe de refroidissement actionnée par une liaison mécanique avec l'arbre extérieur ou intérieur,
- le moteur est multivitesse,
- chaque rotor est associé à une hélice,
- le moteur est suspendu par des couronnes de suspension à l'avant et à l'arrière

Dans le cas notamment de l'application à la propulsion de torpilles, la vitesse est réglable et chaque rotor est associé à une hélice. Les vibrations mécaniques sont atténuées par des couronnes de suspension situées à l'avant et à l'arrière du moteur.

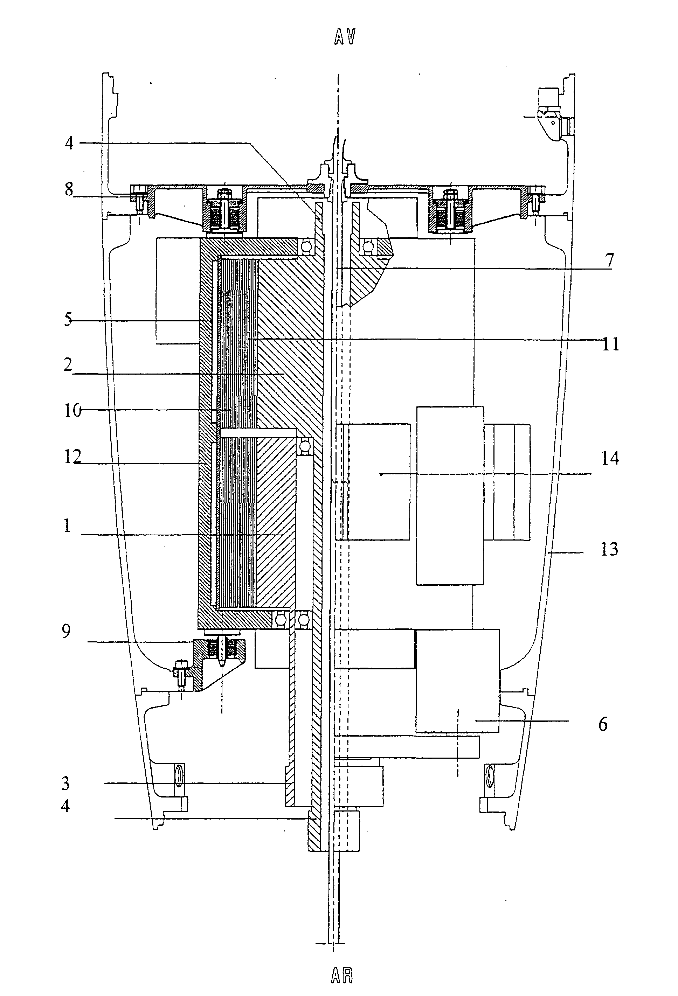

D'autres caractéristiques et avantages de la présente invention apparaitront à la lecture de la description suivante d'un mode de réalisation préférentiel, donné à titre illustratif et non limitatif, d'un moteur autosynchrone alternatif de propulsion d'une torpille, et de la figure unique qui représente une vue en coupe du moteur selon l'invention.

Le moteur selon l'invention est constitué de deux stators 10 cylindriques colinéaires équipés de bobinages et de deux rotors cylindriques colinéaires 1 et 2, qui supportent des aimants 11; les arbres sont concentriques, l'un étant extérieur et référencé 3, l'autre intérieur et référencé 4. L'ensemble est intégré dans un carter 12 à l'intérieur d'une coque 13 de torpille.

L'arbre extérieur est creux et a un diamètre qui lui permet de recevoir l'arbre intérieur.

L'arbre intérieur 4 est entièrement creux et peut laisser libre un diamètre de 30 mm, permettant le passage central d'une commande de guidage de la torpille 7. Il traverse de part en part le moteur, et sert à l'avant de sortie mécanique pour un frein quand le moteur est testé sur banc.

A l'arrière, les deux arbres d'hélices sont en prise directe sur les deux arbres du moteur. Les bouts d'arbres devant se monter sur les arbres d'hélices ont une longueur par exemple de 100 mm et peuvent être cannelés pour l'entraînement.

Chaque rotor met en mouvement une hélice et la propulsion de l'engin, qui peut être une torpille lourde de diamètre voisin de 530 mm, est assurée par deux hélices contrarotatives.

L'électronique de puissance qui comprend notamment des transistor de puissance du type IGBT référencés 14, des filtres et des condensateurs, est implantée à la périphérie et alimentée via un bus barre par la source, l'ensemble constituant ainsi une machine monobloc.

Les composants sont sur les faces extérieures du carter du moteur dont le nombre est imposé par le nombre et la taille des IGBT, et par la nécessité de garder une ou deux zones pour le passage de câblages vers l'arrière de la torpille, ou pour la connectique. Dans un mode de réalisation particulier, les deux stators sont triphasés et l'ensemble moteur comporte six IGBT.

La coque de la torpille comporte un circuit d'eau 5 qui refroidit à la fois les IGBT et les bobinages des stators. Le refroidissement est facilité par la proximité de l'eau de mer (refroidissement direct ou bien par échangeur en coque).

Le moteur est équipé de sa propre pompe de refroidissement 6, qui est actionnée par liaison mécanique avec l'arbre extérieur 3 (courroies, roues dentées,...). Cette pompe peut aussi être raccordée à l'arbre intérieur sur la face opposée.

La source d'alimentation est une pile ou une batterie. L'arrivée de puissance sur le moteur est réalisée par un connecteur enfichable pour câble de 75 mm².

Le moteur est suspendu dans la coque 13 de façon que les vibrations mécaniques transmises à la coque soient réduites par des couronnes de suspension avant et arrière 8 et 9 appartenant à la coque.

Des dispositifs de manutention, qui peuvent être éventuellement les couronnes 8 et 9, éventuellement amovibles sont prévus pour faciliter la manutention.

Le moteur peut être utilisé plusieurs fois pour des durées relativement courtes (de l'ordre de 30 minutes), dans le cadre de tirs d'exercice, au cours desquels il doit assurer toutes ses performances compatibles toutefois avec la source d'alimentation.

Le moteur est capable de fonctionner à différentes vitesses commandées par la torpille. Au cours d'un tir, le moteur peut fonctionner à des régimes variables, les durées et le nombre de cycles étant aléatoires ; en particulier, un tir complet à pleine vitesse constitue un scénario probable.

Le moteur peut être alimenté par différentes sources électriques de la torpille de tension de 250 à 600 V et de courant jusqu'à 540 A.

Dans tous les cas y compris pour le test, l'électronique est alimentée par exemple sous 48 V.

Pendant l'attente du démarrage la tension à vide de la pile ou de la batterie est appliquée au moteur : durée normale de l'ordre de 10 secondes. Cette durée peut atteindre 3 heures.

Deux modes de lancement de la torpille sont possibles :
- lancement en "push-out" : la torpille est éjectée du tube par un système de poussée, le moteur étant commandé quelques instants après l'éjection et les hélices de la torpille étant entraînées pendant cette course non propulsée à une vitesse d'environ 500 tours/mn.
- lancement en autodémarrage : la propulsion est commandée dans le tube et la torpille est éjectée par sa propre poussée.

La vitesse est commandée par la centrale de guidage (CG) de la torpille, qui génère un signal analogique 0-10 volts proportionnel à la vitesse requise.
- entre 0 et 0,5 volt il y a arrêt du moteur,
- une tension de test (48 V) est appliquée pendant 10 s,
- à 4,7 volts la vitesse est de 750 tours/mn
- à 6 volts la vitesse est de 960 tours/mn
- à 6,9 volts la vitesse est de 1100 tours/mn
- à 10 volts la vitesse est de 1600 tours/mn

L'amplitude de l'incrément de vitesse est d'environ 15 tours/mn.

Une rampe d'accélération réglable évite les accoups mécaniques lors des changements de vitesse.

Le mode de commande envisagé consiste à piloter le moteur de l'hélice avant (arbre extérieur) en vitesse selon la définition ci-dessus, le second moteur étant piloté pour délivrer un couple équivalent. L'écart de vitesse entre les deux arbres est, à grande vitesse stabilisée, inférieur à 50 tours/mn.

Au démarrage le moteur accélère de manière continue jusqu'à la vitesse de consigne (accélération réglable de l'ordre de 5 tours/s²).

L'électronique de contrôle/commande du moteur est alimentée par une partie de la pile ou de la batterie sous une tension par exemple de 48 V.

L'électronique du moteur fournit les signaux suivants :
- l'intensité absorbée par le moteur sous forme d'un signal analogique opto-isolé dans le moteur et conditionné 0 / 10 V avec une précision meilleure que + / - 2 % de la mesure;
- la vitesse de rotation du moteur (de préférence représentatif de l'hélice avant ou encore de l'arbre extérieur), sous la forme d'impulsions de fréquence : 5 impulsions par tour.

Une prise de mesure de tension intermédiaire peut être prévue au niveau de l'une des phases du moteur (sortie de l'onduleur la plus proche possible de l'IGBT) à des fins d'enregistrement lors de l'intégration ou d'expertises durant le développement.

Le moteur déclenche une procédure d'autotest lors de chaque mise sous tension, pouvant être redéclenchée sur commande extérieure (signal 10 volts par exemple), dont la durée est de moins de 2 secondes. Le compte-rendu de type "bon/mauvais" est transmis à l'extérieur sous la forme d'un signal analogique de niveau 10 volts par exemple. Ce test ne déclenche pas la rotation du moteur.

La fréquence de découpage est par exemple de 15 kHz. Une commande à 6 états permettant d'améliorer le rendement du moteur peut être prévue pour la vitesse maximale en tant qu'option.

La procédure normale de stoppage est commandée par la centrale de guidage (CG) (ordre 0 Volt sur la consigne en vitesse).

Dans le cadre d'une procédure d'urgence, un contact sec ouvert par la CG entraîne la mise à zéro de la vitesse et après un temps réglable (2 s) provoque le blocage de l'électronique de puissance.

Le test à terre consiste à faire tourner le moteur avec une alimentation extérieure stabilisée de 48 volts, la torpille étant montée. L'alimentation de l'électronique sous 48 V est fournie également au travers de la prise de test de la torpille.

Les pertes thermiques du moteur et de son électronique sont évacuées par le circuit d'eau de mer 5. Le circuit est ouvert à la mer peu après le lancement de la torpille (pas de circuit d'eau ouvert à la mer durant toutes les phases de stockage de la torpille en tube immergé). Le moteur résiste à la corrosion de l'eau de mer sur une durée d'environ 3 semaines.

Le moteur supporte la pression d'immersion de la torpille.

La température maximale de l'eau est prise égale à 25°C. Le débit d'eau de l'ordre de 30 litres/minute est assuré par une pompe appartenant au moteur.

Les caractéristiques dites "nominales" ci-dessous correspondent à un fonctionnement sous 300 V :
à grande vitesse :
   - vitesse de rotation des arbres : + et - 1100 tours/mn.
   - couple sur chaque arbre moteur : 530 Nm
à vitesse intermédiaire
   - vitesse de rotation des arbres : + et - 960 tours/mn.
   - couple sur chaque arbre moteur : 410 Nm
à petite vitesse :
   - vitesse de rotation : + et- 770 tours/mn
   - couple sur chaque arbre moteur : 260 Nm

Les performances requises en fonction de la tension de la source d'énergie sont les suivantes : 2 kW à 48 V, 82 kW à 200 V, 122 kW à une tension > ou = à 250 V.

Le rendement du moteur est supérieur à 89 % à grande vitesse. La commande à six états du moteur permet d'améliorer le rendement du moteur.

Le moteur peut être piloté aux vitesses définies ci-dessus pour des durées aléatoires, jusqu'à épuisement de la source d'énergie.

Le courant absorbé par le moteur est dans tous les cas limité à 540 A.

L'un des deux arbres est piloté en vitesse par la consigne de vitesse fournie par la centrale de guidage (CG). Le deuxième arbre est piloté en couple de façon à ce que le couple soit égal au couple du premier + ou - 2%.

Un signal d'équilibrage de couple fourni par la CG permet de faire varier la consigne de couple de + ou - 20 Nm de façon à compenser les erreurs de couples, les différences de moteurs ou les différences de frottement sur les arbres.

La vitesse du deuxième arbre est limitée à la vitesse du premier à + ou - 10 %.

La différence de couple peut augmenter significativement lors des transitoires de vitesse (ordre de grandeur 10 %) et à vitesse plus faible en restant dans la limite des 10 N.m.

Le moteur est capable de réaliser 30 tirs sans reconditionnement, hormis éventuellement des interventions mineures ne nécessitant pas de démontage (rinçage du circuit d'eau,...).

La masse du moteur et de son électronique de puissance est de moins de 106 kg.

Le sens de rotation du rotor intérieur (hélice arrière) est le sens anti-horaire pour un observateur regardant la sortie mécanique du moteur.

L'isolement électrique mesuré sous 500 V C C est au moins de 5 MOhm.

Par ailleurs, la masse mécanique du moteur est reliée par une tresse à la masse mécanique de la torpille (coques).

Le moteur tournant à vide entre 750 et 1100 tours/mn, l'équilibrage est conforme à la Norme NFE 90-600 Classe G1.

Le moteur est suspendu dans la coque de la torpille de sorte que la fréquence de résonance de l'ensemble est inférieure à 100 Hz, avec pour objectif 50 Hz.

Les vibrations propres au moteur seront réduites autant que possible par des actions de conceptions éprouvées.

Les bobinages et les tôles des stators sont calés et imprégnés à coeur de façon à éviter toute vibration sous l'effet des charges électromagnétiques.

Le moteur selon l'invention répond aux conditions d'environnement définies par les normes en vigueur.

Outre la propulsion de torpilles sous-marines, le moteur selon l'invention peut trouver d'autres applications dans la propulsion d'engins navigables, sur mer ou dans les airs.

## Revendications

1. Procédé de contrôle d'un moteur autosynchrone alternatif pour la propulsion, en particulier de torpilles lourdes, comportant des moyens électroniques de puissance, des moyens électroniques de commande, deux stators (10) équipés de bobinages associés à deux rotors (1,2) contrarotatifs supportant des aimants(11) et colinéaires d'arbres concentriques (3,4), le plus extérieur abritant le plus intérieur, procédé **caractérisé en ce qu'**il consiste à piloter le rotor de l'arbre le plus extérieur en vitesse et à piloter le rotor de l'arbre intérieur en couple de façon à ce qu'il délivre un couple équivalent à celui du rotor de l'arbre le plus extérieur.

2. Moteur autosynchrone alternatif pour la propulsion, en particulier de torpilles lourdes, et pour la mise en ceuvre du procédé selon la revendication1, comportant des moyens électroniques de puissance, des moyens électroniques de commande, deux stators (10) équipés de bobinages associés à deux rotors (1,2) contrarotatifs supportant des aimants(11 ) et colinéaires d'arbres concentriques (3,4), le plus extérieur abritant le plus intérieur, **caractérisé en ce qu'**il comporte des moyens de régulation de la vitesse de l'un des rotors (1,2) ainsi que des moyens de régulation du couple de l'autre rotor.

3. Moteur selon la revendication 2, comportant une source d'alimentation électrique, des moyens électroniques de puissance, des moyens électroniques de commande, et deux ensembles électriques comportant chacun un stator (10) équipé de bobinages associés à deux rotors (1,2) contrarotatifs supportant des aimants(11 ) et colinéaires d'arbres concentriques (3,4), le plus extérieur abritant le plus intérieur, **caractérisé en ce que** les moyens électroniques de contrôle commande comportent des moyens aptes à mesurer l'intensité absorbée par le moteur ainsi que des moyens aptes à mesurer la vitesse de rotation de l'arbre extérieur.

4. Moteur selon la revendication 3, **caractérisé en ce qu'**il comporte , en outre, des moyens de mesure d'une tension intermédiaire.

5. Moteur selon l'une quelconque des revendications 1 à 4, **caractérisé en ce que** l'arbre intérieur (4) traverse le moteur et présente une sortie mécanique pour test.

6. Moteur selon l'une quelconque des revendications 1 à 5, **caractérisé en ce que** les moyens électroniques de puissance sont à la périphérie du carter, pour former un moteur monobloc.

7. Moteur selon l'une quelconque des revendications 1 à 6, **caractérisé en ce qu'**il est alimenté en courant continu.

8. Moteur selon l'une quelconque des revendications 1 à 7, **caractérisé en ce que** l'arbre intérieur (4) est creux pour abriter une commande de filoguidage.

9. Moteur selon l'une quelconque des revendications 1 à 8, **caractérisé en ce que** l'électronique de puissance comporte des transistors de puissance et **en ce que** le carter (12) comporte un circuit d'eau de mer destiné au refroidissement des transistors de puissance (14) et des stators (10).

10. Moteur selon l'une quelconque des revendications 1 à 9, **caractérisé en ce qu'**il comporte une pompe de refroidissement (6) actionnée par une liaison mécanique avec l'arbre extérieur (3) ou intérieur (4).

11. Moteur selon l'une quelconque des revendications 1 à 9, **caractérisé en ce qu'**il est multivitesse.

12. Moteur selon l'une quelconque des revendications 1 à 11, **caractérisé en ce que** chaque rotor est associé à une hélice.

13. Moteur selon l'une quelconque des revendications 1 à 12, **caractérisé en ce qu'**il est suspendu par des couronnes de suspension à l'avant et à l'arrière.

14. Moteur selon l'une quelconque des revendications 1 à 13, **caractérisé en ce qu'**il est équipé de dispositifs de manutention.

## Claims

1. Process for controlling an auto-synchronous AC motor for the propulsion, in particular of heavy torpedoes, comprising electronic power means, electronic control means, two stators (10) fitted with windings associated with two contra-rotating rotors (1, 2) supporting magnets (11) and collinear arrangements of concentric shafts (3, 4), the outermost one enclosing the innermost one, a process **characterised in that** it consists in controlling the speed of the rotor of the outermost shaft and controlling the torque of the rotor of the inner shaft so that it delivers a torque equivalent to that of the rotor of the outermost shaft.

2. Auto-synchronous AC motor for the propulsion, in particular of heavy torpedoes, and for implementing the process according to Claim 1, comprising electronic power means, electronic control means, two stators (10) fitted with windings associated with two contra-rotating rotors (1, 2) supporting magnets (11) and collinear arrangements of concentric shafts (3, 4), the outermost one enclosing the innermost one, **characterised in that** it comprises means for regulating the speed of one of the rotors (1, 2), as well as means for regulating the torque of the other rotor.

3. Motor according to Claim 2, comprising an electrical power source, electronic power means, electronic control means, and two electrical assemblies each comprising a stator (10) fitted with windings associated with two contra-rotating rotors (1, 2) supporting magnets (11), and collinear arrangements of concentric shafts (3, 4), the outermost one enclosing the innermost one, **characterised in that** the electronic control/command means comprise means capable of measuring the current absorbed by the motor, as well as means capable of measuring the speed of rotation of the outer shaft.

4. Motor according to Claim 3, **characterised in that** it furthermore comprises means for measuring an intermediate voltage.

5. Motor according to any one of Claims 1 to 4, **characterised in that** the inner shaft (4) passes through the motor and has a mechanical output for tests.

6. Motor according to any one of Claims 1 to 5, **characterised in that** the electronic power means are at the periphery of the housing, to form a single-housing motor.

7. Motor according to any one of Claims 1 to 6, **characterised in that** it is supplied with direct current.

8. Motor according to any one of Claims 1 to 7, **characterised in that** the inner shaft (4) is hollow to accommodate a wire-guidance control system.

9. Motor according to any one of Claims 1 to 8, **characterised in that** the power electronics comprise power transistors and **in that** the housing (12) comprises a seawater circuit designed for the cooling of the power transistors (14) and of the stators (10).

10. Motor according to any one of Claims 1 to 9, **characterised in that** it includes a cooling pump (6) driven by a mechanical linkage to the outer shaft (3) or to the inner shaft (4).

11. Motor according to any one of Claims 1 to 9, **characterised in that** it is multi-speed.

12. Motor according to any one of Claims 1 to 11, **characterised in that** each rotor is associated with one propeller.

13. Motor according to any one of Claims 1 to 12, **characterised in that** it is suspended by suspension rings at the front and at the rear.

14. Motor according to any one of Claims 1 to 13, **characterised in that** it is fitted with maintenance devices.

## Patentansprüche

1. Verfahren zum Steuern eines autosynchronen Wechselstrommotors für den Antrieb von insbesondere schweren Torpedos, welcher elektronische Leistungsmittel, elektronische Steuermittel, zwei Statoren (10), die mit Spulenwicklungen ausgestattet sind, die zwei gegenlaufenden Rotoren (1, 2) zugeordnet sind, welche Magnete (11) tragen und zu konzentrischen Wellen (3, 4) kollinear sind, aufweist, wobei die äußere die innere abschirmt, wobei das Verfahren **dadurch gekennzeichnet ist, daß** es aus dem Steuern des Rotors der äußeren Welle hinsichtlich der Geschwindigkeit und dem Steuern des Rotors der inneren Welle hinsichtlich des Drehmoments besteht, damit er ein Drehmoment äquivalent zu jenem des Rotors der äußeren Welle liefert.

2. Autosynchroner Wechselstrommotor für den Antrieb von insbesondere schweren Torpedos und für die Durchführung des Verfahrens nach Anspruch 1, welcher elektronische Leistungsmittel, elektronische Steuermittel, zwei Statoren (10), die mit Spulenwicklungen ausgestattet sind, die zwei gegenlaufenden Rotoren (1, 2) zugeordnet sind, welche Magnete (11) tragen und zu konzentrischen Wellen (3, 4) kollinear sind, aufweist, wobei die äußere die innere abschirmt, **dadurch gekennzeichnet, daß** er Mittel zur Regelung der Geschwindigkeit von einem der Rotoren (1, 2) sowie Mittel zur Regelung des Drehmoments des anderen Rotors aufweist.

3. Motor nach Anspruch 2 mit einer Stromversorgungsquelle, elektronischen Leistungsmitteln, elektronischen Steuermitteln, und zwei elektrischen Baugruppen mit jeweils einem Stator (10), der mit Spulenwicklungen ausgestattet ist, die zwei gegenlaufenden Rotoren (1, 2) zugeordnet sind, welche Magnete (11) tragen und zu konzentrischen Wellen (3, 4) kollinear sind, wobei die äußere die innere abschirmt, **dadurch gekennzeichnet, daß** die elektronischen Befehlssteuermittel Mittel, die die Intensität messen können, die vom Motor aufgenommen wird, sowie Mittel, die die Rotationsgeschwindigkeit der äußeren Welle messen können, umfassen.

4. Motor nach Anspruch 3, **dadurch gekennzeichnet, daß** er außerdem Mittel zum Messen einer Zwischenspannung aufweist.

5. Motor nach einem der Ansprüche 1 bis 4, **dadurch gekennzeichnet, daß** die innere Welle (4) den Motor durchquert und einen mechanischen Ausgang für einen Test aufweist.

6. Motor nach einem der Ansprüche 1 bis 5, **dadurch gekennzeichnet, daß** sich die elektronischen Leistungsmittel am Umfang des Gehäuses befinden, um einen Monoblockmotor zu bilden.

7. Motor nach einem der Ansprüche 1 bis 6, **dadurch gekennzeichnet, daß** er mit Gleichstrom gespeist wird.

8. Motor nach einem der Ansprüche 1 bis 7, **dadurch gekennzeichnet, daß** die innere Welle (4) hohl ist, um eine Drahtlenkungssteuerung abzuschirmen.

9. Motor nach einem der Ansprüche 1 bis 8, **dadurch gekennzeichnet, daß** die Leistungselektronik Leistungstransistoren umfaßt und daß das Gehäuse (12) einen Meerwasserkreislauf aufweist, der für die Kühlung der Leistungstransistoren (14) und der Statoren (10) vorgesehen ist.

10. Motor nach einem der Ansprüche 1 bis 9, **dadurch gekennzeichnet, daß** er eine Kühlpumpe (6) aufweist, die durch eine mechanische Verbindung mit der äußeren Welle (3) oder der inneren Welle (4) betätigt wird.

11. Motor nach einem der Ansprüche 1 bis 9, **dadurch gekennzeichnet, daß** er mehrere Geschwindigkeiten aufweist.

12. Motor nach einem der Ansprüche 1 bis 11, **dadurch gekennzeichnet, daß** jeder Rotor mit einer Schiffsschraube verbunden ist.

13. Motor nach einem der Ansprüche 1 bis 12, **dadurch gekennzeichnet, daß** er durch Aufhängungskränze vorn und hinten aufgehängt ist.

14. Motor nach einem der Ansprüche 1 bis 13, **dadurch gekennzeichnet, daß** er mit Handhabungsvorrichtungen ausgestattet ist.
